# EUROPÄISCHE PATENTSCHRIFT

(11) **EP 0 906 463 B1**
(45) Veröffentlichungstag und Bekanntmachung des Hinweises auf die Patenterteilung: **14.03.2001**
(21) Anmeldenummer: 97940051.2
(22) Anmeldetag: 31.07.1997
(51) Int. Cl.: D04H 1/64, D06M 13/256, D06M 15/227, D06M 15/233, D06M 15/263, D06M 15/285, D06M 15/29, D06M 15/327

(54) **VERWENDUNG EINES COPOLYMERISATS ALS LÖSUNGSMITTELFESTES TEXTILBINDEMITTEL**
USE OF A COPOLYMER AS SOLVENT RESISTING TEXTILE BINDING AGENT
UTILISATION D'UN COPOLYMERE COMME LIANT POUR TEXTILES RESISTANT AUX SOLVANTS

(30) Priorität: 08.08.1996 DE 19631935
(43) Veröffentlichungstag der Anmeldung: 07.04.1999
(73) Patentinhaber: Wacker-Chemie GmbH, 81737 München (DE)
(72) Erfinder: KOHLHAMMER, Klaus, Dr., 84533 Marktl (DE); KOEGLER, Gerhard, 84508 Hirten (DE); LUMPP, Andreas, 84489 Burghausen (DE); ROCKINGER geb.SCHWEMMER, Monika, 84539 Simbach am Inn (DE)
(74) Vertreter: Schuderer, Michael, Dr.
(86) Internationale Anmeldenummer: EP9704176
(87) Internationale Veröffentlichungsnummer: WO9806888

(56) Entgegenhaltungen:
- EP-A- 0 086 889
- EP-A- 0 596 318
- EP-A- 0 609 849
- EP-A- 0 612 718
- EP-A- 0 709 507
- DE-A- 2 551 556
- DE-A- 4 432 945
- DE-B- 1 906 386
- FR-A- 2 401 968
- US-A- 3 922 462
- US-A- 3 992 333
- US-A- 4 059 665
- US-A- 4 610 920

## Beschreibung

Die Erfindung betrifft die Verwendung von Copolymerisaten als lösungsmittelfeste Textilbindemittel.

Die Verwendung von wäßrigen Copolymerdispersionen als Bindemittel zur Verfestigung und Beschichtung von Fasergebilden wie Geweben, Vliesen und Watten aus Textilfaser oder Textilgarnen ist bekannt. Häufig werden dabei Copolymerdispersionen von (Meth)acrylat- oder Vinylester-Copolymerisaten eingesetzt, welche zur Verbesserung der Festigkeit selbstvernetzende Comonomereinheiten mit N-Methylol- oder N-Methylolether-Funktionen enthalten. Üblicherweise werden bis zu 10 Gew% N-Methylol-(Meth)acrylamid (NMA bzw. NMMA) copolymerisiert. Nachteilig bei diesen Bindemitteln ist die Formaldehydfreisetzung infolge Spaltung der N-Methylol-Funktion sowie die geringe Lösungsmittelbeständigkeit der damit verfestigten oder beschichteten Materialien. Die Verbesserung der Lösungsmittelbeständigkeit durch Einbau von vorvernetzenden, mehrfach ethylenisch ungesättigten Comonomer-Einheiten ist bekannt. Diese Maßnahme führt jedoch häufig zu Problemen bei der Herstellung der Copolymerdispersionen.

Aus der DE-A-2512589 (US-A-4044197) sind thermisch selbstvernetzende Copolymere bekannt, welche 2 bis 10 Gew% N-Methylol-(meth)acrylamid oder deren N-Methylolether enthalten. Die Herstellung der Copolymerdispersionen erfolgt in Gegenwart beliebiger anionischer, kationischer oder nichtionischer Emulgatoren, wobei anionische und nichtionische Emulgatoren bevorzugt sind. Nachteilig ist, daß bei den darin verwendeten N-Methylolacrylamid-haltigen Copolymeren zwar die getemperten Copolymerfilme gute Lösungsmittelbeständigkeit zeigen, nicht aber die damit gebundenen Vliese.

Die EP-B-205862 betrifft Textilbinder auf der Basis von Vinylacetat-Ethylen-Copolymerisaten, welche 1 bis 5 Gew% N-Methylol(meth)acrylamid-Einheiten bzw. deren Ether enthalten. Zur Verbesserung der Naßfestigkeit, bei Verwendung eines Copolymerbinders mit niederem NMA-Gehalt, wird vorgeschlagen zusätzlich Melaminformaldehyd-Harze einzusetzen. Die Polymerisation erfolgt in Gegenwart von anionischen oder nichtionischen Emulgatoren.

Die EP-A-261378 lehrt, die Hitzebeständigkeit von mit N-Methylol-funktionellen Styrol-Acrylat-Copolymeren gebundenen Fasermatten dadurch zu verbessern, daß als Bindemittel solche Copolymerisate eingesetzt werden, bei denen die N-Methylol-Funktionen ganz oder teilweise verethert sind. Die Polymerisation kann in Gegenwart beliebiger nichtionischer oder anionischer Emulgatoren erfolgen.

In der WO-A-92/08835 werden Textilbindemittel auf der Basis von Vinylacetat/Ethylen-Copolymeremulsionen beschrieben, welche zur Verminderung der Formaldehyd-Freisetzung anstelle von N-Methylol-(meth)acrylamid-Einheiten ausschließlich N-(n-butoxymethyl)-acrylamid-Einheiten enthalten. Zur Herstellung nach dem Emulsionspolymerisationsverfahren können die gängigen ionischen oder nichtionischen Emulgatoren eingesetzt werden.

Die EP-A 86889 (AU-A 8310718) betrifft ein Verfahren zur Herstellung eines Textilbeschichtungsmittels, welches unter Einwirkung von Wasser keine Weißquellung und keinen Weißbruch zeigt. Das Beschichtungsmittel besteht aus einer wäßrigen Copolymeremulsion, welche durch Emulsionscopolymerisation von (Meth)acrylaten mit N-Methylol-(meth)acrylamid erhalten werden, wobei die N-Methylol-(meth)acrylamide zu mindestens 20 Mol% mit einem Alkohol verethert sind und die Emulsionspolymerisation in Gegenwart eines Gemisches aus Fettalkohol mit 10 bis 20 C-Atomen und Fettalkohol-Addukten von Alkylenoxiden oder Alkylphenolen erfolgt.

In der DE-A-4432945 (WO-A-96/08597) wird zur Verbesserung der Lösungsmittelfestigkeit vorgeschlagen, Textilbinder mit einem Gemisch aus N-Methylol-funktionellen Comonomereinheiten und N-Methylolether-funktionellen Comonomereinheiten einzusetzen. Man erhält dadurch eine deutliche Verbesserung der Lösungsmittelfestigkeit, allerdings ist diese für einige Anwendungen, speziell bei weichen Textilbindern, beispielsweise hoch ethylenhaltigen Vinylacetat-Ethylen-Copolymerisaten, noch nicht befriedigend.

Copolymere Textilbindemittel, welche N-Methylolacrylamide oder N-Alkoxymethylacrylamide sowie Dialkylester der Sulfobernsteinsäure enthalten, sind aus US-A-3 922 462, US-A-3 992 333, US-A-4 059 665, EP-A-0 609 849, FR-A-2 401 968, DE-A-1 906 386 und EP-A-0 709 507 bekannt.

Der Erfindung lag daher die Aufgabe zugrunde, ein Mittel zur Verwendung als Textilbindemittel auf der Basis von wäßrigen Copolymerdispersionen oder Copolymerpulvern mit N-Methylol-funktionellen und N-Methyloletherfunktionellen Comonomereinheiten zur Verfügung zu stellen, mit dem eine weitere Steigerung der Lösungsmittelfestigkeit, neben hoher Trocken- und Naßfestigkeit, speziell auch bei weichen Textilbindern, erhalten wird.

Gegenstand der Erfindung ist die Verwendung gemäß Anspruch 1.

Bevorzugte N-(Alkoxymethyl)-(meth)acrylamide sind N-(Isobutoxymethyl)-acrylamid (IBMA), N-(Isobutoxymethyl)-methacrylamid (IBMMA), N-(n-Butoxymethyl)-acrylamid (NBMA) und N-(n-Butoxymethyl)-methacrylamid (NBMMA).

Bevorzugt werden Copolymere, welche in den genannten Gewichtsanteilen, Gemische der N-(Alkoxymethyl)-(meth)acrylamide mit N-Methylolacrylamid oder N-Methylolmethacrylamid in einem Gewichtsverhältnis von N-Methylolverbindung zu N-(Alkoxymethyl)-Verbindung von 10 : 1 bis 1 : 5 enthalten. Am meisten bevorzugt werden Copolymere, welche 0.5 bis 3.0 Gew%, bezogen auf das Gesamtgewicht des Copolymers, eines Gemisches von NMA und IBMA (IBMMA) in einem Gewichtsverhältnis von NMA/IBMA (IBMMA) von 6 : 1 bis 1 : 3, insbesonders von 6 : 1 bis 1 : 1 enthalten.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 10 C-Atomen, beispielsweise VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Die zu verwendenden Vinylester-Copolymerisate können gegebenenfalls 1.0 bis 50 Gew%, bezogen auf das Gesamtgewicht der Comonomerphase, alpha-Olefine wie Ethylen oder Propylen und/oder Vinylaromaten wie Styrol und/oder Vinylhalogenide wie Vinylchlorid und/oder Acrylsäureester bzw. Methacrylsäureester von Alkoholen mit 1 bis 12 C-Atomen, wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat und/oder ethylenisch ungesättigte Dicarbonsäureester bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei vorzugsweise so getroffen, daß Copolymerisate mit einer Glasübergangstemperatur T_{g} von -40°C bis +60°C, vorzugsweise -30°C bis +35°C, erhalten werden.

Die zu verwendenden (Meth)acrylsäureester-Copolymerisate können gegebenenfalls 1.0 bis 50 Gew%, bezogen auf das Gesamtgewicht der Comonomerphase, alpha-Olefine wie Ethylen oder Propylen und/oder Vinylaromaten wie Styrol und/oder Vinylhalogenide wie Vinylchlorid und/oder ethylenisch ungesättigte Dicarbonsäureester bzw. deren Derivate wie Diisopropylfumarat, die Dimethyl-, Dibutyl- und Diethylester der Maleinsäure bzw. Fumarsäure, oder Maleinsäureanhydrid enthalten. Die Auswahl aus den genannten Monomeren wird dabei vorzugsweise so getroffen, daß Copolymerisate mit einer Glasübergangstemperatur T_{g} von -40°C bis +60°C, vorzugsweise -30°C bis +35°C, erhalten werden.

Gegebenenfalls enthalten die zu verwendenden Vinylester-Copolymerisate und die (Meth)acrylsäureester-Copolymerisate noch 0.05 bis 3.0 Gew%, bezogen auf das Gesamtgewicht des Comonomergemisches, ein oder mehrere Hilfsmonomere aus der Gruppe der ethylenisch ungesättigten Carbonsäuren, vorzugsweise Acrylsäure oder Methacrylsäure, aus der Gruppe der ethylenisch ungesättigten Carbonsäureamide, vorzugsweise Acrylamid und 2-Acrylamidopropansulfonsäure, aus der Gruppe der ethylenisch ungesättigten Sulfonsäuren bzw. deren Salze, vorzugsweise Vinylsulfonsäure, und/oder aus der Gruppe der mehrfach ethylenisch ungesättigten Comonomeren, beispielsweise Divinyladipat, 1,9-Decadien, Allylmethacrylat, Triallylcyanurat und vernetzende Comonomere wie Acrylamidoglykolsäure (AGA), Methacrylamidoglykolsäuremethylester (MAGME), Polyglykoldimethacrylat.

Bevorzugt verwendete Vinylester-Copolymerisate enthalten als Comonomereinheiten a), jeweils bezogen auf das Gesamtgewicht des Copolymers:
90 bis 99.99 Gew% Vinylester, insbesonders Vinylacetat; 49.9 bis 89.99 Gew% Vinylester, insbesonders Vinylacetat sowie 10 bis 50 Gew% alpha-Olefin, insbesonders Ethylen;
50 bis 75 Gew% Vinylacetat, 1 bis 30 Gew% Vinylester einer alpha-verzweigten Carbonsäure insbesonders mit 9 und/oder 10 C-Atomen, sowie 10 bis 40 Gew% Ethylen;
70 bis 98.99 Gew% Vinylacetat und 1 bis 30 Gew% Vinylester einer alpha-verzweigten Carbonsäure insbesonders mit 9 und/oder 10 C-Atomen,
70 bis 98.99 Gew% Vinylester, insbesonders Vinylacetat, und 0.1 bis 30 Gew% Acrylsäureester, insbesonders n-Butylacrylat oder 2-Ethylhexylacrylat;
50 bis 75 Gew% Vinylacetat, 0.1 bis 30 Gew% Acrylsäureester, insbesonders n-Butylacrylat oder 2-Ethylhexylacrylat, sowie 10 bis 40 Gew% Ethylen;
30 bis 75 Gew% Vinylacetat, 1 bis 30 Gew% Vinylester einer alpha-verzweigten Carbonsäure, insbesonders mit 9 und/oder 10 C-Atomen, 0.1 bis 30 Gew% Acrylsäureester, insbesonders n-Butylacrylat oder 2-Ethylhexylacrylat, sowie 10 bis 40 Gew% Ethylen.

Bevorzugt verwendete (Meth)acrylsäureester-Copolymerisate enthalten als Comonomereinheiten a), jeweils bezogen auf das Gesamtgewicht des Copolymers:
90 bis 99.99 Gew% n-Butylacrylat und/oder 2-Ethylhexylacrylat;
40 bis 59.99 Gew% Methylmethacrylat, 59.99 bis 40 Gew% n-Butylacrylat und/oder 2-Ethylhexylacrylat;
40 bis 59.99 Gew% Styrol und 59.99 bis 40 Gew% n-Butylacrylat und/oder 2-Ethylhexylacrylat.

Die Angaben in Gewichtsprozent bei den genannten bevorzugten Vinylester- und (Meth)acrylsäureester-Copolymerisaten addieren sich dabei jeweils auf 100 Gew%.

Vorzugsweise werden 0.5 bis 5 Gew%, bezogen auf das Gesamtgewicht des Copolymers, eines oder mehrerer Emulgatoren aus der Gruppe der Diester der Sulfobernsteinsäure mit linearen, unverzweigten oder verzweigten, oder cycloaliphatischen Alkoholen mit 4 bis 13 C-Atomen eingesetzt. Beispiele hierfür sind Dibutyl-Sulfobernsteinsäure-Diester, Dihexyl-Sulfobernsteinsäure-Diester, Dicyclohexyl-Sulfobernsteinsäurediester, Dioctyl-Sulfobernsteinsäure-Diester, Ditridecyl-Sulfobernsteinsäure-Diester.

Besonders vorteilhaft für die Verbesserung der Lösungsmittelfestigkeit der Textilbinder wirkt der Einsatz der Diester der Sulfobernsteinsäure bei weichen Textilbindern, das heißt Textilbindern auf der Basis von Copolymeren mit einer Tg von -30°C bis +10°C. Beispiele hierfür sind die obengenannten Copolymerisate von Vinylacetat mit Ethylen, von Vinylacetat und Acrylsäureestern gegebenenfalls mit Ethylen, Copolymerisate von Acrylsäureestern wie n-Butylacrylat und/oder 2-Ethylhexylacrylat. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Die Herstellung des zu verwendenden lösungsmittelfesten Textilbindemittels kann nach dem Emulsionspolymerisationsverfahren in wäßriger Phase erfolgen. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente. In einer bevorzugten Ausführungsform werden 10 bis 25 Gew% der Comonomeren a) vorgelegt und der Rest zusammen mit den Comonomeren b) in Emulsion zudosiert. Bei der Copolymerisation mit Ethylen wird vorzugsweise bei einem Druck von 10 bis 100 bar abs. (1 bar = 0,1 MPa) gearbeitet.

Die Polymerisation wird in einem Temperaturbereich von 40°C bis 80°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 1.0 Gew%, bezogen auf das Gesamtgewicht der Monomeren, eingesetzt werden. Beispiele hierfür sind Ammonium- und Kaliumpersulfat, Alkylhydroperoxide, wie tert.-Butylhydroperoxid, Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Bei der Redoxinitiierung werden dabei vorzugsweise eine oder beide Redox-Katalysatorkomponenten während der Polymerisation dosiert.

Die Zugabe der Diester der Sulfobernsteinsäure ist beliebig. Vorzugsweise werden diese während der Polymerisation, gegebenenfalls zusammen mit Wasser und Comonomer, zudosiert.

Die Diester der Sulfobernsteinsäure können auch im Gemisch mit üblicherweise bei der Emulsionspolymerisation verwendeten Emulgatoren eingesetzt werden. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen. Geeignete nichtionische Tenside sind beispielsweise Nonylphenol, Alkylpolyglykolether oder Alkylarylpolyglykolether mit 8 bis 40 Ethylenoxid-Einheiten.

Es kann auch so vorgegangen werden, daß die Emulsionspolymerisation in Gegenwart der genannten, üblicherweise bei der Emulsionspolymerisation verwendeten anionischen oder nichtionischen Tenside durchgeführt wird, und die Diester der Sulfobernsteinsäure erst nach Abschluß der Polymerisation der Polymerdispersion in den angegebenen Mengen zugegeben werden.

Gegebenenfalls können Schutzkolloide, vorzugsweise in Mengen von bis zu 4 Gew%, bezogen auf das Gesamtgewicht der Monomeren, eingesetzt werden. Beispiele hierfür sind Vinylalkohol/Vinylacetat-Copolymere mit einem Gehalt von 80 bis 100 Mol% Vinylalkoholeinheiten, Polyvinylpyrrolidone mit einem Molekulargewicht von 5000 bis 400000, Hydroxyethylcellulosen mit einem Substitutionsgradbereich von 1.5 bis 3.

Der für die Polymerisation gewünschte pH-Bereich, der im allgemeinen zwischen 3 und 7 liegt, kann in bekannter Weise durch Säuren, Basen oder übliche Puffersalze, wie Alkaliphosphate, Alkaliacetate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Der Feststoffgehalt der wäßrigen Dispersionen beträgt vorzugsweise 30 bis 70 Gew%.

Zur Herstellung der zu verwendenden Copolymerpulver wird die Dispersion getrocknet, vorzugsweise sprühgetrocknet, oder koaguliert und anschließend wirbelschichtgetrocknet, oder gefriergetrocknet, besonders bevorzugt sprühgetrocknet. Hierbei kann auf die bekannten Vorrichtungen, wie zum Beispiel Versprühen durch Mehrstoffdüsen oder mit der Scheibe, in einem gegebenenfalls erhitzten Trockengasstrom, zurückgegriffen werden. Im allgemeinen werden Temperaturen über 250°C nicht angewandt. Die optimale Temperatur des Trockengases kann in wenigen Versuchen ermittelt werden; oft haben sich Temperaturen über 60°C besonders bewährt.

Zur Erhöhung der Lagerfähigkeit und um zum Beispiel bei Pulvern mit niederer Glasübergangstemperatur T_{g} ein Verbacken und Verblocken zu verhindern, wird bei der Trocknung gegebenenfalls Antiblockmittel, beispielsweise Aluminiumsilikate, Kieselgur, Calciumcarbonat, zugegeben. Des weiteren können gegebenenfalls noch Entschäumer, beispielsweise auf Silikon- oder Kohlenwasserstoffbasis, oder Verdüsungshilfen, beispielsweise Polyvinylalkohole oder wasserlösliche Melamin-Formaldehyd-Kondensationsprodukte, der Dispersion zugegeben werden.

In einer bevorzugten Ausführungsform enthalten die zu verwendenden Copolymerpulver noch 0 bis 30 Gew%, besonders bevorzugt 1 bis 15 Gew%, bezogen auf das Basispolymerisat, Polyvinylalkohol mit einem Hydrolysegrad von 85 bis 94 Mol%, und/oder 0 bis 10 Gew% Vinylalkoholcopolymerisate mit 5 bis 35 Gew% 1-Methylvinylalkoholeinheiten, und/oder 0 bis 30 Gew%, besonders bevorzugt 4 bis 20 Gew%, bezogen auf das Gesamtgewicht polymerer Bestandteile, Antiblockmittel und gegebenenfalls bis zu 2 Gew%, bezogen auf das Basispolymerisat, Entschäumer.

Die zu verwendenden wäßrigen Copolymerdispersionen bzw. die Copolymerpulver eignen sich zur Ausrüstung und Verfestigung von natürlichen oder synthetischen Fasermaterialien. Beispiele hierfür sind Holzfaser, Cellulosefaser, Wolle, Baumwolle, Mineralfasern, Keramikfasern, Kunstfasern auf der Basis von faserbildenden Polymeren wie Viskosefaser, Polyethylen-, Polypropylen-, Polyester-, Polyamid-, Polyacrylnitril- oder Carbonfaser, Fasern von Homo- oder Copolymerisaten des Vinylchlorids oder Fasern von Homo- oder Copolymerisaten des Tetrafluorethylens. Besonders geeignet sind die wäßrigen Copolymerdispersionen bzw. die Copolymerpulver aus Verwendung zur Ausrüstung und Verfestigung von Polyesterfaser, Polypropylenfaser- und Cellulosefaser-Materialien.

In einer bevorzugten Ausführungsform wird das erfindungsgemäß zu verwendende Textilbindemittel in einer Menge von 5 bis 50 Gew% Bindemittel, bezogen auf das Fasergewicht, auf das flächenhaft ausgebreitete Fasermaterial aufgetragen und bei einer Temperatur von 80 bis 260°C getrocknet.

Vor der Verfestigung werden die Fasern flächenhaft ausgebreitet. Die Verfahren hierzu sind bekannt und primär von der Anwendung, in die das verfestigte Fasermaterial geht, abhängig. Die Fasern können mittels einer Luftlege-, Naßlege-, Direktspinn- oder Krempelvorrichtung ausgelegt werden. Gegebenenfalls können die Flächengebilde vor der Verfestigung mit Bindemittel noch mechanisch verfestigt werden, beispielsweise durch Kreuzlegen, Nadeln oder Wasserstrahlverfestigung.

Die wäßrigen Copolymerdispersionen können in üblicher Weise durch Imprägnieren, Schaumimprägnieren, Sprühen, Pflatschen, Streichen oder Bedrucken aufgetragen werden. Gegebenenfalls nach Abtrennen des überschüssigen Bindemittels durch beispielsweise Abquetschen, werden die textilen Gebilde bei Temperaturen von 80°C bis 260°C, vorzugsweise zwischen 120°C und 200°C, getrocknet. Je nach Anwendungsbereich liegt die für die Verfestigung des Fasermaterials notwendige Menge an Bindemittel zwischen 5 und 50 Gew% Bindemittel, bezogen auf das Fasergewicht.

Werden Copolymerpulver verwendet, kann das pulverförmige Bindemittel in an sich bekannter Weise auf das, gegebenenfalls mechanisch vorverfestigte, Fasermaterial aufgestreut, eingestreut (beispielsweise bei Krempelwatten), eingerüttelt oder direkt mit der Faser vermischt werden. Die textilen Gebilde können bei Temperaturen von 80°C bis 260°C, vorzugsweise zwischen 120°C und 200°C, getrocknet werden. Je nach Anwendungsbereich liegt die für die Verfestigung des Fasermaterials notwendige Menge an Bindemittel zwischen 5 und 50 Gew% Bindemittel, bezogen auf das Fasergewicht.

Zu dem erfindungsgemäß zu verwendendem Bindemittel können noch Pigmente, Antioxidantien, Farbstoffe, Weichmacher, Filmbildehilfsmittel, Füllstoffe, Flammschutzmittel, Schaumbildehilfsmittel, Schauminhibitoren, Netzmittel, Thermosensibilisierungsmittel, Antistatika, Biozide, Griffverbesserungsmittel, zusätzliche Vernetzer oder Katalysatoren zur eventuell notwendigen Beschleunigung der Vernetzungsreaktion in dazu üblichen Mengen zugegeben werden.

Das zu verwendende lösungsmittelfeste Textilbindmittel eignet sich vorzugsweise für die Verfestigung von Vliesstoffen, beispielsweise im Haushalts- und Hygienebereich und für Industriewischtücher. Ein weiteres Anwendungsgebiet ist dessen Verwendung für die Schiebefestausrüstung von Geweben gemäß Anspruch 8.

Die nachfolgenden Beispiele dienen zur weiteren Erläuterung der Erfindung:

### Herstellung der Copolymerdispersionen:

### Beispiel 1:

In einem Druckreaktor wurden 5.1 kg Wasser, 2.5 g einer 5%-igen wäßrigen Ameisensäurelösung, 25.7 g einer 25 %-igen wäßrigen Lösung von Vinylsulfonat, 20 g eines Ethylenoxid-Propylenoxid-Blockcopolymers zusammen mit 68.4 g Butylacrylat und 588 g Vinylacetat vorgelegt. Es wurde auf 50°C aufgeheizt und Ethylen mit einem Druck von 75 bar aufgepreßt. Nach Erreichen des Temperaturgleichgewichts wurden 547 g einer 5%-igen wäßrigen Lösung von Ammoniumpersulfat und 547 g einer 2.5%-igen wäßrigen Lösung von Ascorbinsäure zudosiert. Nach Auspolymerisation der Vorlage wurden 5880 g Vinylacetat und 301 g Butylacrylat zudosiert. Zusammen mit der Vinylacetat-Dosierung wurde ein Gemisch aus 515 g Wasser, 305 g einer 48%-igen wäßrigen N-Methylolacrylamid-Lösung, 40.2 g einer 85%-igen wäßrigen Lösung von N-(isobutoxymethyl)-acrylamid und 205 g Dihexyl-Sulfobernsteinsäure-Diester zudosiert.
Nach Beendigung der Polymerisation resultierte eine Dispersion mit einem Feststoffgehalt von 51.7 Gew% eines Copolymers mit 30.9 Gew% Ethylen, 1.4 Gew% N-Methylolacrylamid und 0.35 Gew% (N-Isobutoxymethyl)-acrylamid.

### Beispiel 2:

Es wurde analog Beispiel 1 vorgegangen, mit dem Unterschied, daß 136.7 g Dihexyl-Sulfobernsteinsäure-Diester zudosiert wurden und zusätzlich 119.6 g eines Isotridecylethoxylats mit 15 EO-Einheiten (Emulgator 1) teilweise in die Vorlage gegeben wurde und teilweise dosiert wurde.
Nach Beendigung der Polymerisation resultierte eine Dispersion mit einem Feststoffgehalt von 51.4 % eines Copolymers mit 32.0 Gew% Ethylen, 1.4 Gew% N-Methylolacrylamid und 0.35 Gew% (N-Isobutoxymethyl)-acrylamid.

### Beispiel 3:

Es wurde analog Beispiel 1 vorgegangen, mit dem Unterschied, daß 68.4 g Dihexyl-Sulfobernsteinsäure-Diester zudosiert wurden und 188 g eines Isotridecylethoxylats mit 15 EO-Einheiten (Emulgator 2) teilweise in die Vorlage gegeben und teilweise dosiert wurden.
Nach Beendigung der Polymerisation resultierte eine Dispersion mit einem Feststoffgehalt von 51.5 % eines Copolymers mit 31.5 Gew% Ethylen, 1.4 Gew% N-Methylolacrylamid und 0.35 Gew% (N-Isobutoxymethyl)acrylamid.

### Vergleichsbeispiel A:

Es wurde analog Beispiel 1 vorgegangen, mit dem Unterschied, daß 381 g einer 48%-igen wäßrigen N-Methylolacrylamid-Lösung, aber kein N-(Isobutoxymethyl)-acrylamid zudosiert wurden.
Nach Beendigung der Polymerisation resultierte eine Dispersion mit einem Feststoffgehalt von 54.0 % eines Copolymers mit 31.4 Gew% Ethylen und 1.75 Gew% N-Methylolacrylamid.

### Vergleichsbeispiel 1:

Es wurde analog Beispiel 1 vorgegangen, mit dem Unterschied, daß kein Dihexyl-Sulfobernsteinsäure-Diester eingesetzt wurde, dafür aber ein Gemisch aus 188 g eines Isotridecylethoxylats mit 15 EO-Einheiten (Emulgator 1) und 51.3 g eines sulfatisierten Alkylethoxylats mit ca. 3 EO-Einheiten (Emulgator 2) teilweise vorgelegt und teilweise zudosiert wurde.
Nach Beendigung der Polymerisation resultierte eine Dispersion mit einem Feststoffgehalt von 55.4 % eines Copolymers mit 30.5 Gew% Ethylen, 1.4 Gew% N-Methylolacrylamid, 0.35 Gew% (N-Isobutoxymethyl)acrylamid.

### Vergleichsbeispiel 2:

Es wurde analog Vergleichsbeispiel A vorgegangen, mit dem Unterschied, daß kein Dihexyl-Sulfobernsteinsäure-Diester eingesetzt wurde, dafür aber ein Gemisch aus 188 g eines Isotridecylethoxylats mit 15 EO-Einheiten (Emulgator 1) und 51.3 g eines sulfatisierten Alkylethoxylats mit ca. 3 EO-Einheiten (Emulgator 2) teilweise vorgelegt und teilweise zudosiert wurde.
Nach Beendigung der Polymerisation resultierte eine Dispersion mit einem Feststoffgehalt von 53.1 % eines Copolymers mit 33.5 Gew% Ethylen und 1.75 Gew% N-Methylolacrylamid.

### Beispiel 5:

Es wurde analog Beispiel 1 vorgegangen, mit dem Unterschied, daß mit einem Ethylendruck von 65 bar polymerisiert wurde. Nach Beendigung der Polymerisation resultierte eine Dispersion mit einem Festgehalt von 52.8 % eines Copolymers mit 22.3 Gew% Ethylen, 1.6 Gew% N-Methylolacrylamid und 0.4 Gew% (N-Isobutoxymethyl)acrylamid.

### Beispiel 6:

Es wurde analog Beispiel 5 vorgegangen, mit dem Unterschied, daß anstelle von Dihexyl-Sulfobernsteinsäure-Diester die gleiche Menge Dibutyl-Sulfobernsteinsäure-Diester eingesetzt wurde.
Nach Beendigung der Polymerisation resultierte eine Dispersion mit einem Festgehalt von 54.0 % eines Copolymers mit 20.6 Gew% Ethylen, 1.6 Gew% N-Methylolacrylamid und 0.4 Gew% (N-Isobutoxymethyl)acrylamid.

### Beispiel 7:

Es wurde analog Beispiel 5 vorgegangen, mit dem Unterschied, daß anstelle von Dihexyl-Sulfobernsteinsäure-Diester die gleiche Menge Dioctyl-Sulfobernsteinsäure-Diester eingesetzt wurde.
Nach Beendigung der Polymerisation resultierte eine Dispersion mit einem Festgehalt von 54.0 % eines Copolymers mit 22.2 Gew% Ethylen, 1.6 Gew% N-Methylolacrylamid und 0.4 Gew% (N-Isobutoxymethyl)acrylamid.

### Beispiel 8:

Es wurde analog Beispiel 5 vorgegangen, mit dem Unterschied, daß anstelle von Dihexyl-Sulfobernsteinsäure-Diester die gleiche Menge Dicyclohexyl-Sulfobernsteinsäure-Diester eingesetzt wurde.
Nach Beendigung der Polymerisation resultierte eine Dispersion mit einem Festgehalt von 54.0 % eines Copolymers mit 20.6 Gew% Ethylen, 1.6 Gew% N-Methylolacrylamid und 0.4 Gew% (N-Isobutoxymethyl)acrylamid.

### Beispiel 9:

Es wurde analog Beispiel 5 vorgegangen, mit dem Unterschied, daß anstelle von Dihexyl-Sulfobernsteinsäure-Diester die gleiche Menge Ditridecyl-Sulfobernsteinsäure-Diester eingesetzt wurde.
Nach Beendigung der Polymerisation resultierte eine Dispersion mit einem Festgehalt von 54.0 % eines Copolymers mit 23.3 Gew% Ethylen, 1.6 Gew% N-Methylolacrylamid und 0.4 Gew% (N-Isobutoxymethyl)acrylamid.

### Vergleichsbeispiel 3:

Es wurde analog Beispiel 5 vorgegangen, mit dem Unterschied, daß anstelle von Dihexyl-Sulfobernsteinsäure-Diester die gleiche Menge Alkyl-Sulfobernsteinsäure-Monoester eingesetzt wurde.
Nach Beendigung der Polymerisation resultierte eine Dispersion mit einem Festgehalt von 52.2 % eines Copolymers mit 21.6 Gew% Ethylen, 1.6 Gew% N-Methylolacrylamid und 0.4 Gew% (N-Isobutoxymethyl)acrylamid.

### Anwendungstechnische Prüfung:

### Herstellung der Vliese:

Zur Herstellung der Vliesstoffe wurde ein Zellwollfaservlies mittels Vollbadimprägnierung mit 30 Gew% Copolymerdispersion (Feststoff bezogen auf Faser) verfestigt. Der überschüssige Binder wurde zwischen zwei Walzen abgequetscht und das Vlies 3 Minuten bei 150°C in einem Trommeltrockner getrocknet.

Bestimmung der Festigkeit der Vliese gemäß DIN 53857:
Die Trockenfestigkeit, Naßfestigkeit und Lösungsmittelfestigkeit der Vliese wurde mittels Vermessung der Höchstzugkraft (HZK) von Vliesstreifen mit einer Breite von 1.5 cm und einer Länge von 15 cm bestimmt.
Vor der Messung wurden die Vliese mindestens 24 Stunden lang in Normklima bei T = 23°C und 50 % RLF (DIN 50014) gelagert. Zur Bestimmung der Naßfestigkeit wurden die Vliese unmittelbar vor der Messung 1 Minute in Wasser gelagert. Zur Bestimmung der Lösungsmittelfestigkeit wurden die Vliese unmittelbar vor der Messung 1 Minute in Isopropanol gelagert.
Die Messung der Höchstzugkraft erfolgte mit einer Zwick-Zugprüfmaschine, wobei die Zugmessung mit einer konstanten Dehnungsgeschwindigkeit von 100 mm/min erfolgte. Bei jeder Messung wird die Höchstzugkraft festgestellt und die Messung beendet, wenn die Kraft auf 40 % der Höchstzugkraft gefallen ist. Jeweils 3 Vliesstreifen pro Probe wurden gemeinsam eingespannt. Es wurde der Mittelwert aus 3 Meßreihen bestimmt.

Die Ergebnisse der Messungen für die Beispiele 1 bis 3 und die Vergleichsbeispiele A, 1 und 2 sind in Tabelle 1 zusammengefaßt.

Aus Tabelle 1 geht hervor, daß bei Verwendung von Succinaten bessere Ergebnisse erhalten werden, als bei Verwendung anderer Emulgatoren (Vergleich von Beispiel 3 mit Vergleichsbeispiel 1). Mit steigendem Succinat-Anteil nimmt die Lösungsmittelfestigkeit zu (Vergleich Beispiel 3 mit Beispiel 2 und 1). Der Vergleich von Vergleichsbeispiel A mit Vergleichsbeispiel 2 zeigt, daß die Wirkung von Succinaten auch bei nur NMA-haltigen Bindern festzustellen ist.

Die Ergebnisse der Messungen für die Beispiele 5 bis 9 sind in Tabelle 2 zusammengefaßt.

Der Vergleich von Beispiel 6 bis 9 zeigt, daß mit steigender Kettenlänge der die LM-Festigkeit steigernde Effekt der Sulfosuccinat-Diester zunimmt. Dies ist umso überraschender, da zu erwarten war, daß mit zunehmender Kettenlänge mit dem hydrophoben Charakter auch die LM-Empfindlichkeit steigen sollte.

Der Vergleich der Beispiele 5 bis 9 mit Vergleichsbeispiel 3 zeigt, daß der die LM-Festigkeit steigernde Effekt nur bei Sulfosuccinat-Diestern auftritt. Mit Mono-Succinaten wird die LM-Festigkeit nicht verbessert. Die LM-Festigkeit des Vergleichsbeispiels 3 lag im Bereich des Disuccinat-freien Ansatzes (Vergleichsbeispiel 2).

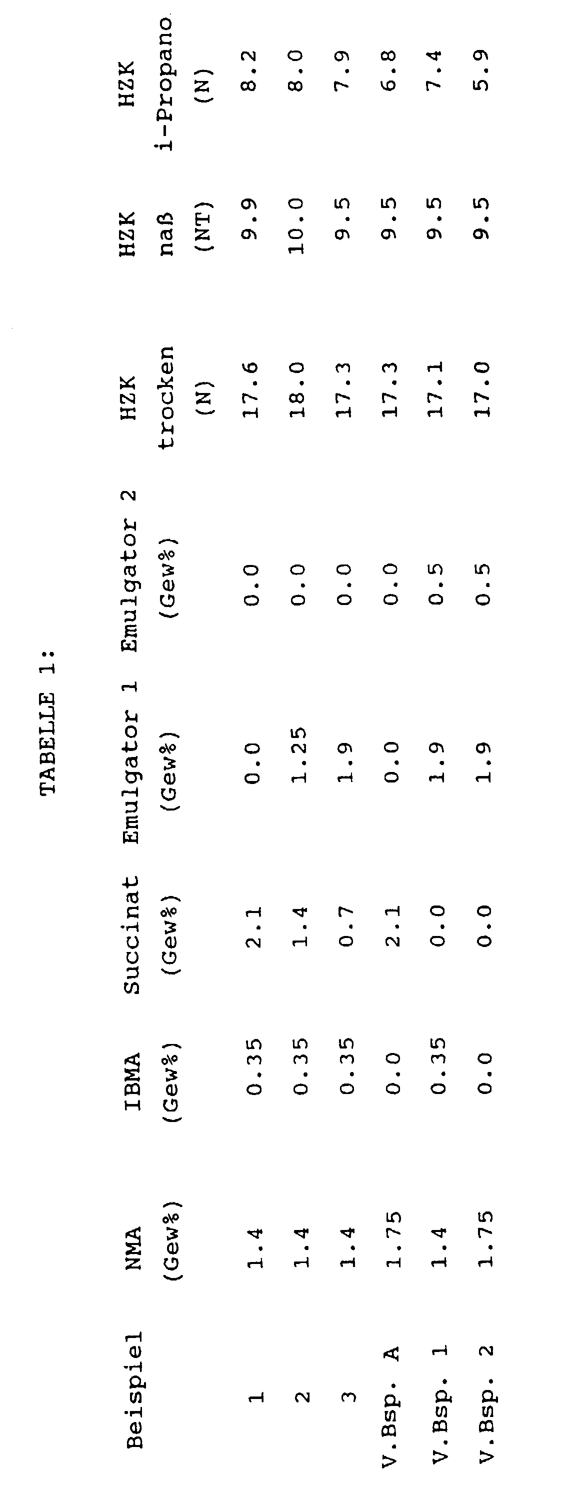

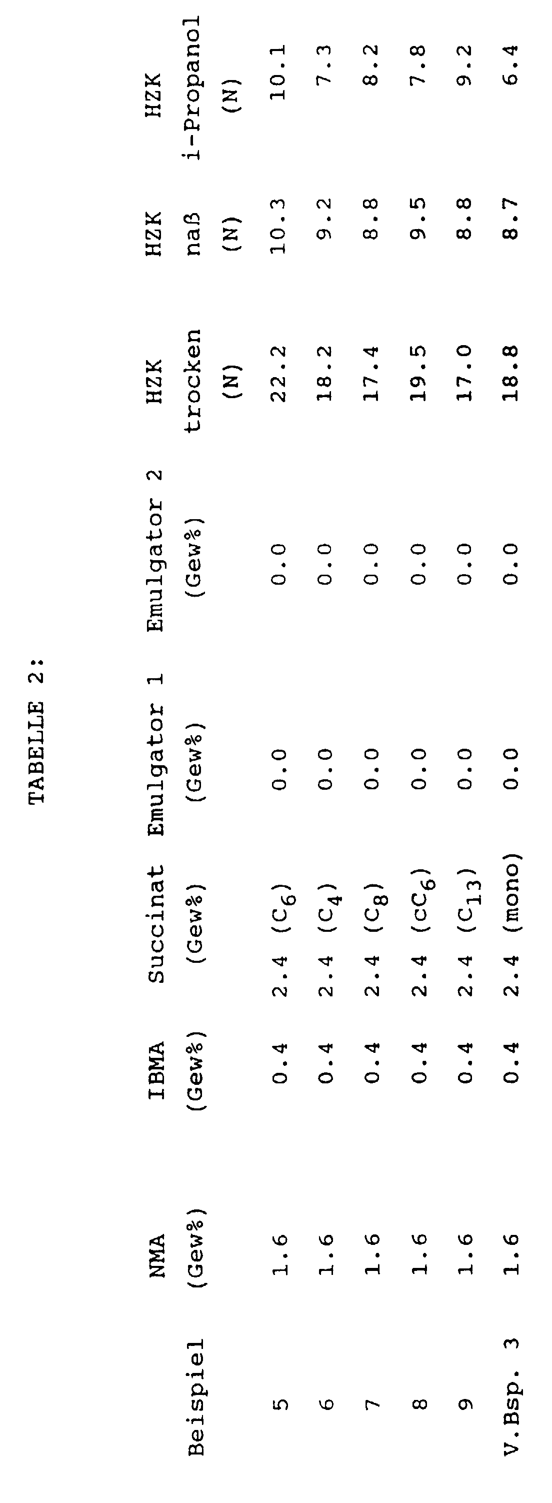

## Patentansprüche

1. Verwendung einer wäßrigen Copolymerdispersion oder eines Copolymerpulvers von Copolymeren mit einer Tg von -60°C bis +60°C als lösungsmittelfestes Textilbindemittel, erhältlich mittels radikalischer Emulsionspolymerisation, in Gegenwart von Emulgator(en) und gegebenenfalls nach Trocknung der dabei erhaltenen wäßrigen Copolymerdispersion, von
a) ein oder mehreren Monomeren aus der Gruppe der Vinylester von unverzweigten oder verzweigten Carbonsäuren mit 1 bis 12 C-Atomen, der Ester der Acrylsäure und Methacrylsäure mit unverzweigten oder verzweigten Alkoholen mit 1 bis 12 C-Atomen, Vinylaromaten, Vinylhalogenide und alpha-Olefine und
b) 0.01 bis 10 Gew%, bezogen auf das Gesamtgewicht des Copolymers, Gemische von N-(Alkoxymethyl)acrylamiden oder N-(Alkoxymethyl)- methacrylamiden mit einem C₁- bis C₆-Alkylrest mit N-Methylolacrylamid (NMA) oder N-Methylolmethacrylamid (NMMA),
dadurch gekennzeichnet, daß als Emulgator(en) 0.01 bis 10 Gew%, bezogen auf das Gesamtgewicht des Copolymers, eines oder mehrerer Emulgatoren aus der Gruppe der Diester der Sulfobernsteinsäure mit linearen, unverzweigten oder verzweigten, oder cycloaliphatischen Alkoholen mit 4 bis 13 C-Atomen eingesetzt werden, oder nach Abschluß der Emulsionspolymerisation zur wäßrigen Copolymerdispersion zugegeben werden.

2. Verwendung nach Anspruch 1, wobei als Monomere a), jeweils bezogen auf das Gesamtgewicht des Copolymers,
49.9 bis 89.99 Gew% Vinylester sowie 10 bis 50 Gew% alpha-Olefin, oder
50 bis 75 Gew% Vinylacetat, 1 bis 30 Gew% Vinylester einer alpha-verzweigten Carbonsäure sowie 10 bis 40 Gew% Ethylen, oder
70 bis 98.99 Gew% Vinylacetat und 1 bis 30 Gew% Vinylester einer alpha-verzweigten Carbonsäure, oder
70 bis 98.99 Gew% Vinylester und 0.1 bis 30 Gew% Acrylsäureester, oder
50 bis 75 Gew% Vinylacetat, 0.1 bis 30 Gew% Acrylsäureester, sowie 10 bis 40 Gew% Ethylen, oder
30 bis 75 Gew% Vinylacetat, 1 bis 30 Gew% Vinylester einer alpha-verzweigten Carbonsäure, 0.1 bis 30 Gew% Acrylsäureester, sowie 10 bis 40 Gew% Ethylen, oder
90 bis 99.99 Gew% n-Butylacrylat und/oder 2-Ethylhexylacrylat, oder
40 bis 59.99 Gew% Methylmethacrylat und 59.99 bis 40 Gew% n-Butylacrylat und/oder 2-Ethylhexylacrylat, oder
40 bis 59.99 Gew% Styrol und 59.99 bis 40 Gew% n-Butylacrylat und/oder 2-Ethylhexylacrylat,
copolymerisiert werden.

3. Verwendung nach Anspruch 1 oder 2, wobei als Comonomere b) Gemische der N-(Alkoxymethyl)-(meth)acrylamide mit N-Methylolacrylamid oder N-Methylolmethacrylamid in einem Gewichtsverhältnis von N-Methylolverbindung zu N-(Alkoxymethyl)-Verbindung von 10 : 1 bis 1 : 5 copolymerisiert werden.

4. Verwendung nach Anspruch 3, wobei 0.5 bis 3.0 Gew%, bezogen auf das Gesamtgewicht des Copolymers, eines Gemisches von N-Methylolacrylamid (NMA) und N-(Isobutoxymethyl)-(Meth)Acrylamid (IBM(M)A) in einem Gewichtsverhältnis von NMA/IBM(M)A von 6 : 1 bis 1 : 3, copolymerisiert werden.

5. Verwendung nach Anspruch 4, wobei die Glasübergangstemperatur Tg des Copolymeren von -30°C bis +10°C

6. Verwendung nach Anspruch 1 bis 5, wobei das Textilbindemittel in einer Menge von 5 bis 50 Gew% Bindemittel, bezogen auf das Fasergewicht, auf das flächenhaft ausgebreitete Fasermaterial aufgetragen wird und bei einer Temperatur von 80°C bis 260°C getrocknet wird.

7. Verwendung nach Anspruch 1 bis 6, für die Verfestigung von Vliesstoffen.

8. Verwendung nach Anspruch 1 bis 6 für die Schiebefestausrüstung von Geweben.

## Claims

1. The use of an aqueous copolymer dispersion or of a copolymer powder of copolymers having a T_{g} of -60°C to +60°C as solvent-resistant textile binders, obtainable by means of radical emulsion polymerization, in the presence of emulsifier(s) and optionally after drying of the aqueous copolymer dispersion thereby obtained, of
a) one or more monomers from the group consisting of vinyl esters of unbranched or branched carboxylic acids having 1 to 12 C atoms, esters of acrylic acid and methacrylic acid with unbranched or branched alcohols having 1 to 12 C atoms, vinylaromatics, vinyl halides and alpha-olefins and
b) 0.01 to 10% by weight, based on the total weight of the copolymer, of mixtures of N-(alkoxymethyl)acrylamides or N-(alkoxymethyl)methacrylamides with a C₁- to C₆-alkyl radical with N-methylolacrylamide (NMA) or N-methylolmethacrylamide (NMMA),
wherein as emulsifier(s) from 0.01 to 10% by weight, based on the overall weight of the copolymer, of one or more emulsifiers from the group of the diesters of sulfosuccinic acid with linear, unbranched or branched, or cycloaliphatic alcohols having 4 to 13 C atoms are employed or are added to the aqueous copolymer dispersion after the end of the emulsion polymerization.

2. The use as claimed in claim 1, in which, as monomers a), in each case based on the total weight of the copolymer
49.9 to 89.99% by weight of vinyl ester and 10 to 50% by weight of alpha-olefin, or
50 to 75% by weight of vinyl acetate, 1 to 30% by weight of vinyl ester of an alpha-branched carboxylic acid and 10 to 40% by weight of ethylene, or
70 to 98.99% by weight of vinyl acetate and 1 to 30% by weight of vinyl ester of an alpha-branched carboxylic acid, or
70 to 98.99% by weight of vinyl ester and 0.1 to 30% by weight of acrylic acid ester, or
50 to 75% by weight of vinyl acetate, 0.1 to 30% by weight of acrylic acid ester, and 10 to 40% by weight of ethylene, or
30 to 75% by weight of vinyl acetate, 1 to 30% by weight of vinyl ester of an alpha-branched carboxylic acid, 0.1 to 30% by weight of acrylic acid ester, and 10 to 40% by weight of ethylene, or
90 to 99.99% by weight of n-butyl acrylate and/or 2-ethylhexyl acrylate, or
40 to 59.99% by weight of methyl methacrylate and 59.99 to 40% by weight of n-butyl acrylate and/or 2-ethylhexyl acrylate, or
40 to 59.99% by weight of styrene and 59.99 to 40% by weight of n-butyl acrylate and/or 2-ethylhexyl acrylate, are copolymerized.

3. The use as claimed in claim 1 or 2, in which, as comonomers b), mixtures of the N-(alkoxymethyl)(meth)acrylamides with N-methylolacrylamide or N-methylolmethacrylamide in a weight ratio of N-methylol compound to N-(alkoxymethyl) compound of 10:1 to 1:5 are copolymerized.

4. The use as claimed in claim 3, in which 0.5 to 3.0% by weight, based on the total weight of the copolymer, of a mixture of N-methylolacrylamide (NMA) and N-(isobutoxymethyl) (meth)acrylamide (IBM(M)A) in a weight ratio of NMA/IBM(M)A of 6:1 to 1:3, are copolymerized.

5. The use as claimed in claim 4, in which the glass transition temperature Tg of the copolymer is in the range from -30°C to +10°C.

6. The use as claimed in claim 1 to 5, in which the textile binder in an amount of 5 to 50% by weight of binder, based on the fiber weight, is applied to the fiber material spread out in a platform, and is dried at a temperature of 80°C to 260°C.

7. The use as claimed in claim 1 to 6 for the bonding of nonwovens.

8. The use as claimed in claim 1 to 6 for the non-slip finishing of woven fabrics.

## Revendications

1. Utilisation d'une dispersion copolymère aqueuse ou d'une poudre copolymère de copolymères ayant une Tv de -60°C à +60°C en tant que liant pour textiles résistant aux solvants, pouvant être obtenu par polymérisation en émulsion radicalaire, en présence d'(un) émulsifiant(s) et éventuellement après séchage de la dispersion copolymère aqueuse ainsi obtenue, de
a) un ou plusieurs monomères parmi le groupe constitué d'esters vinyliques d'acides carboxyliques non ramifiés ou ramifiés ayant de 1 à 12 atomes de carbone, d'esters de l'acide acrylique et de l'acide méthacrylique avec des alcools non ramifiés ou ramifiés ayant de 1 à 12 atomes de carbone, de composés vinylaromatiques, d'halogénures de vinyle et d'alpha-oléfines, et
b) de 0,01 à 10% en poids, par rapport au poids total du copolymère, de mélanges de N-(alcoxyméthyl)acrylamides ou de N-(alcoxyméthyl)méthacrylamides ayant un radical alkyle en C₁ à C₆ avec du N-méthylolacrylamide (NMA) ou du N-méthylolméthacrylamide (NMMA),
caractérisée en ce que l'on utilise ou on ajoute à la dispersion copolymère aqueuse, après la fin de la polymérisation en émulsion, en tant qu'émulsifiant(s), de 0,01 à 10% en poids, par rapport au poids total du copolymère, d'un ou de plusieurs émulsifiants parmi le groupe constitué de diesters de l'acide sulfosuccinique avec des alcools linéaires, non ramifiés ou ramifiés, ou cycloaliphatiques ayant de 4 à 13 atomes de carbone.

2. Utilisation selon la revendication 1, dans laquelle en tant que monomères a), dans chaque cas par rapport au poids total du copolymère,
de 49,9 à 89,99% en poids d'esters vinyliques et de 10 à 50% en poids d'alpha-oléfines, ou
de 50 à 75% en poids d'acétate de vinyle, de 1 à 30% en poids d'esters vinyliques d'un acide carboxylique ramifié en alpha et de 10 à 40% en poids d'éthylène, ou de 70 à 98,99% en poids d'acétate de vinyle et de 1 à 30% en poids d'esters vinyliques d'un acide carboxylique ramifié en alpha, ou
de 70 à 98,99% en poids d'esters vinyliques et de 0,1 à 30% en poids d'esters acryliques, ou
de 50 à 75% en poids d'acétate de vinyle, de 0,1 à 30% en poids d'esters acryliques, et de 10 à 40% en poids d'éthylène, ou
de 30 à 75% en poids d'acétate de vinyle, de 1 à 30% en poids d'esters vinyliques d'un acide carboxylique ramifié en alpha, de 0,1 à 30% en poids d'esters acryliques et de 10 à 40% en poids d'éthylène, ou
de 90 à 99,99% en poids d'acrylate de n-butyle et/ou d'acrylate de 2-éthylhexyle, ou
de 40 à 59,99% en poids de méthacrylate de méthyle et de 59,99 à 40% en poids d'acrylate de n-butyle et/ou d'acrylate de 2-éthylhexyle, ou
de 40 à 59,99% en poids de styrène et de 59,99 à 40% en poids d'acrylate de n-butyle et/ou d'acrylate de 2-éthylhexyle,
sont copolymérisés.

3. Utilisation selon la revendication 1 ou 2, dans laquelle en tant que comonomères b), des mélanges de N-(alcoxyméthyl)-(méth)acrylamides avec du N-méthylolacrylamide ou du N-méthylolméthacrylamide sont copolymérisés à un rapport pondéral entre le composé N-méthylol et le composé N-(alcoxyméthyle) de 10:1 à 1:5.

4. Utilisation selon la revendication 3, dans laquelle de 0,5 à 3,0% en poids, par rapport au poids total du copolymère, d'un mélange de N-méthylolacrylamide (NMA) et de N-(isobutoxyméthyl)(méth)acrylamide (IBM(M)A) sont copolymérisés à un rapport pondéral de NMA/IBM(M)A de 6:1 à 1:3.

5. Utilisation selon la revendication 4, dans laquelle la température de transition vitreuse Tv du copolymère est de -30°C à +10°C.

6. Utilisation selon les revendications 1 à 5, dans laquelle le liant pour textiles est appliqué sur la matière fibreuse et tendue à plat en une quantité de 5 à 50% en poids de liant, par rapport au poids de fibre, et séché à une température de 80°C à 260°C.

7. Utilisation selon les revendications 1 à 6, pour la consolidation de non-tissés.

8. Utilisation selon les revendications 1 à 6, pour le finissage non glissant d'étoffes tissées.
